# EUROPEAN PATENT SPECIFICATION

(11) **EP 1 255 363 B1**
(45) Date of publication and mention of the grant of the patent: **27.06.2007**
(21) Application number: 01304097.7
(22) Date of filing: 04.05.2001
(51) Int. Cl.: H04B 7/26

(54) **Wireless telecommunications system and method for asymmetric data transmission**
Funktelekommunikationssystem und Verfahren zur asymmetrischen Datenübertragung
Système de télécommunication sans fil et procédé pour transmission asymétrique des données

(43) Date of publication of application: 06.11.2002
(73) Proprietor: LUCENT TECHNOLOGIES INC., Murray Hill, New Jersey 07974-0636 (US)
(72) Inventor: Briand, Jacques, Langatou, Minihy-Treguier (FR); Chapon, Thierry Hervé, 76230 Bois-Guillaume (FR); Falaki, Hamid Reza, Swindon SN5 5AA, Wiltshire (GB); Le Goff, Yvon, 22700 Perros-Guirec (FR); Pinkard, David Peter, Swindon SN5 4DQ, Wiltshire (GB); Rittenhouse, George E., Holmdel, NJ (US)
(74) Representative: Sarup, David Alexander

(56) References cited:
- EP-A- 1 069 790
- DE-A- 19 857 041
- FR-A- 2 777 407
- US-A- 5 754 961
- US-A- 5 956 642

## Description

### Technical Field

The present invention relates to a wireless telecommunications system and a method of wireless telecommunication, suitable in particular for UMTS or other third generation systems.

### Background

Cellular Mobile Systems such as UMTS or other third generation systems, see for example 3^{rd} Generation Partnership Projects Technical Report 3GTR21.905, are usually designed with cells having a single transmission and reception path to the rest of network. The capacity of each cell is constrained by many physical parameters and one of these parameters is the available bandwidth for the total traffic. Bandwidth is a scarce and expensive resource.

Thus ways of using the available bandwidth efficiently are of significant practical benefit.

EP-A-1069790 and FR-A-2 777 407 disclose a wireless communications system having a symmetrical two-way main channel having an uplink and a downlink and an additional channel solely allocated to the downlink. The additional channel may be used for high speed data transmission.

### Summary of Invention

The present invention provides a wireless telecommunications system comprising a base station and a user terminal, in use the base station sending some data to the user terminal on a first channel at a first frequency in selected time slots within time frames and the user terminal sending some data to the base station on a second channel of a second frequency in selected time slots within time frames, the first frequency and second frequency being offset, the apparatus further comprising a unit operative to transmit further data to or receive further data from the user terminal on a third channel at a third frequency different from the first frequency and second frequency, characterized in that said further data is transmitted or received in time slots in which data is not sent on the first channel nor the second channel; and
the first and second channels are paired frequency division duplex channels in compressed mode such that time slots are available in each time frame to be used by the third channel. This preferably provides more efficient usage of the available bandwidth.

This thus preferably provides a means to extend the call capacity of a cellular system using a paired frequency division duplex FDD band by providing an additional unpaired band to be used for uplink or downlink in, for example, a 3^{rd} Generation wireless mobile communication system.

By data is meant in particular message data, i.e. payload data, other than signalling.

Because spectrum is available for UMTS in the TDD band, but TDD terminals and network equipment will generally be made available later than FDD ones such that for the time being the TDD band will be largely unused, the preferred scheme provides an important benefit, namely asymmetric capacity on the air interface of UMTS (particularly for data traffic). It preferably involves use of the TDD frequencies as extra capacity for the transport of data. It also advantageously will be of use to network operators not willing to install UMTS Terrestrial Radio Access Network (UTRAN) type Time Division Duplex (TDD) in their unpaired frequency bands.

Preferably the third channel is sent on a bearer channel shared between a plurality of user terminals.

Preferably the apparatus is a UMTS system. Preferably, the third channel is sent downlink and the unit is a transmitter operative to transmit the third channel on the Downlink Shared Channel (DSCH). System capacity is preferably increased in particular by using the downlink shared channel DSCH on a supplementary carrier under control of the dedicated channel DCH in compressed mode, i.e. when the DCH channel does not take up all time slots within time frames.

Alternatively, the third channel is sent uplink and the unit is a receiver operative to receive the third channel on the Common Packet Channel (CPCH).

The present invention also provides a method of wireless telecommunication comprising the steps of: to a user terminal transmitting downlink some data on a first channel in selected time slots within the frames and at a first frequency, transmitting from the user terminal uplink some data on a second channel in selected time slots within time frames and at a second frequency, transmitting or receiving respectively to or from the user terminal further data on a third channel at a third frequency, characterized in that said further data is sent on the third channel in timeslots in which data is not sent on the first channel nor the second channel; and
the first and second channels are paired frequency division duplex channels in compressed mode such that time slots are available in each time frame to be used by the third channel.

### Brief Description of the Drawings

Preferred embodiments of the present invention will now be described by way of example and with reference to the drawings in which:
Figure 1 is a diagram illustrating allocation of frequency spectrum for UMTS (Universal Mobile Telecommunications Standard),
Figure 2 is a diagram illustrating the basic method of time multiplexing uplink and downlink dedicated channels and the downlink shared channel DSCH operating on a different frequency,
Figure 3 is a diagram illustrating communications between a base station (BS) and user equipment (UE) and from a supplementary transmitter to the user equipment.
Figure 4 is a diagram illustrating a first preferred method of data transport on the downlink shared channel (DSCH), and
Figure 5 is a diagram illustrating a second preferred method of data transport on the downlink shared channel (DSCH),
Figure 6 is a diagram illustrating the process of reconfiguring the system so as to incorporate the supplementary transmitter,
Figure 7 is a diagram illustrating addition of a radio link by way of a soft handover,
Figure 8 is a diagram illustrating removal of a radio link by way of a soft handover,
Figure 9 is a diagram illustrating transmission on the downlink shared channl (DSCH), and
Figure 10 is a diagram illustrating the method of time multiplexing with the uplink shared channel (CPCH) sent at a different frequency to the dedicated channels.

### Detailed Description of Preferred Embodiments.

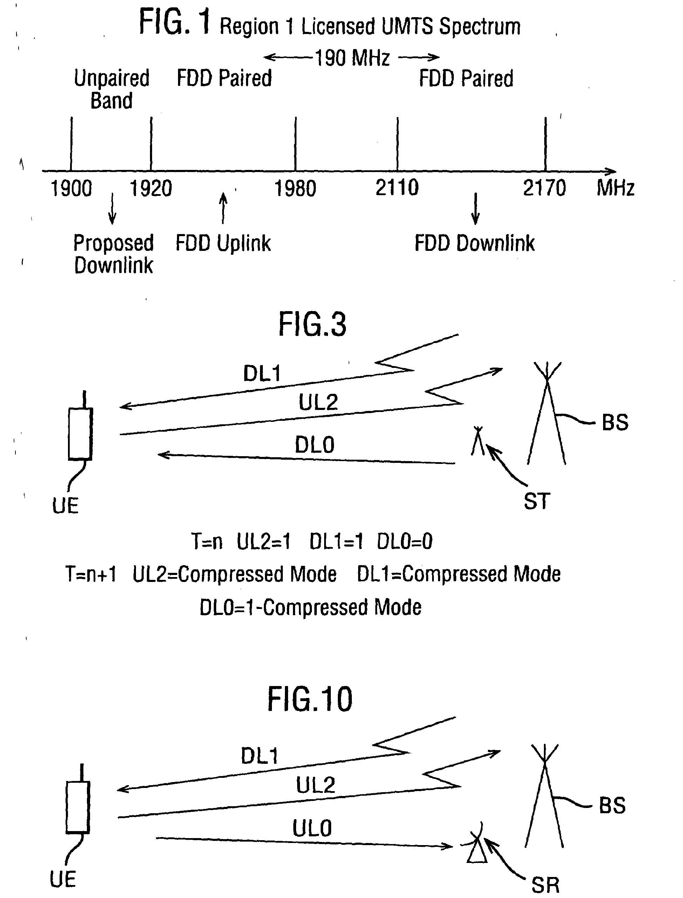

The frequency spectrum allocation for UMTS is shown in Figure 1.

The so-called TDD unpaired band in the International Mobile Telecommunication specification IMT2000 comprises of several channels with a bandwidth of 5MHz, allocated between 1900 MHz and 1920 MHz and between 2010 and 2025 MHz . The FDD spectrum is allocated as 12 paired channels with a bandwidth of 5 MHz and spaced by 190 MHz. The uplink band uses frequencies between 1920 MHz and 1980 MHz, while the downlink band is between 2110 MHz and 2170 MHz.

### Use of an extra unpaired channel downlink.

From Figure 1, it will be seen that in order to use the TDD band as an extra downlink capacity for data, the following constraints apply:
- the user equipment UE must be able to receive in the 1900 to 1920 MHz band, while its normal receiving band, is 2110 to 2170 MHz (frequency division duplex).
- the base station must be able to transmit in the 1900 to 1920 MHz band, while it's 'normal' transmit band is 2110 to 2170 MHz.

Basically the preferred method consists in using 5 MHz channels of the TDD band as an extra downlink channel. A supplementary transmitter to the base station transmits a FDD type of frame configured with Downlink Shared Channels (DSCH) that UE's can periodically decode.

From a radio point if view, it is possible to use a TDD channel as a downlink extra capacity for data, provided that:
- the UE is capable of receiving in the TDD band,
- protocol arrangements are such that the UE receives data in the TDD band at instants in time when it is not transmitting,
- the base station and supplementary transmitter are physically separated, or alternatively, suitable filtering is installed on site.

In order to involve as few changes as possible to the FDD standard (as currently defined), the base station transmits a signal framed as in FDD.

The data transmitted on the extra downlink carrier could be carried on dedicated channels, common channels or shared channels. However the dedicated channel, as currently defined, requires simultaneous uplink and downlink transmission. Modification to this would in fact be the definition of a new type of channel. Also, use of the common channels presents more or less the same problem. Moreover, common channels are not well suited for transport of high volumes of data. Accordingly, it was felt that shared channels transmitted on the new downlink carrier appear as the best suited way to efficiently transmit high volumes of data from the network to UE's.

As currently defined by 3GPP, shared channels can only be operated in conjunction with at least one dedicated channel (TS 25.302 §8.2). Therefore, a UE which needs data transmission with the network, establishes a low bit rate FDD Dedicated channel (DCH), as currently defined by the 3GPP FDD standards. When the network detects that the UE is temporarily receiving high volumes of data, the high bit rate shared channel (DSCH) of the extra downlink carrier is used, instead of the DCH.

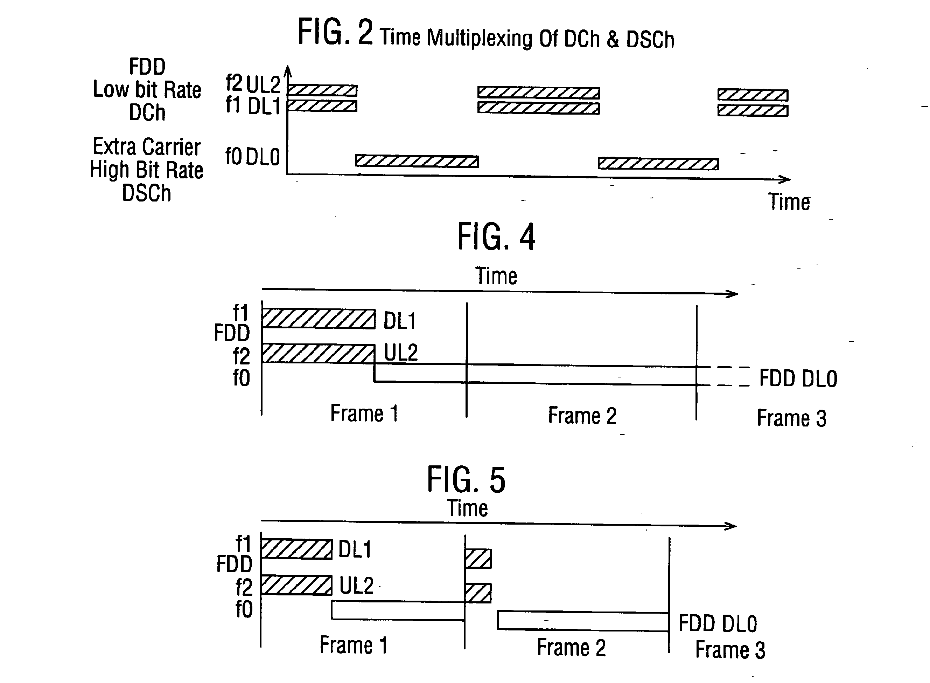

Because reception on the extra channel is not possible while the UE transmits, the compressed mode (as defined in TS 25.212 §4.4) is used to temporarily 'leave' the FDD carrier, and go to receive high volume of data on the extra carrier. Fig. 2 depicts this behaviour. Extra protocols ensure detection by the user equipment of the supplementary channel DLO through its pilot, along with Synchronisation Channel SCH and Physical-Common Control Physical Channel P-CCPCH control channels. These indicate that it is a supplementary channel and transmit the Data using the DSCH frame format.

The basic system arrangement is shown in Figure 3. A base station BS is provided which communicates with a user equipment UE using appropriate dedicated control channels, denoted DL1 for the downlink and UL2 for the uplink in Figure 3. The uplink channel UL2 has frequency f₂ and the downlink channel DL1 has a frequency f, which is offset.

In addition, a supplementary transmitter ST is provided which transmits downlink to the user equipment using a further channel DLₒ at a further frequency fₒ. This further channel DLₒ is part of the downlink shored channel DSCH and is used to carry data to the user equipment UE.

As shown in Figure 2, the shared channel DLₒ is time duplexed with the dedicated downlink channel DL1. As shown in Figure 4, the transmission of data on channel DLₒ occurs continuously over several frames in systems more suited to static situations.

In systems where high user equipment mobility occurs, the time multiplexing is done every frame as shown in Figure 5. As defined by the rules of the compressed mode of operation, the time during which the UE is allowed to leave the FDD carrier DL1, UL2, is relatively short (7 slots per frame, 14 consecutive slots at the maximum). This is however long enough to download high volumes of data, particularly if small spreading factors are used on the DSCH, and the operation is repeated at every frame. Moreover, this mode of operation allows
- power control on the DSCH, Traffic Power Control bits being transmitted over the DCH,
- acknowledgements of data received on DSCH, through the DCH.

Because a UE has to get synchronized to the transmitting base station, and because the UE has to report to the network whether the extra carrier can be received (mobility aspects), the following physical channels are the only ones to be required on the extra downlink carrier:
- SCH for synchronization purposes
- P-CCPCH to carry the broadcast channel (BCH)
- PDSCH to carry the Downlink Shared Channel (DSCH).

### Base Station and Supplementary Transmitter

Using a TDD channel as a permanent downlink channel involves interference at the base station. Continuous transmission in the TDD band causes interference for a standard FDD base station receiving in the FDD uplink band. However, this problem is not specific to the mode of operation proposed here. It also exists with standard TDD base stations. Solutions may involve improved characteristics (at one or both of either the base station and supplementary transmitter) for adjacent channel filtering, or geographical separation of the base station and supplementary transmitter where it has been found that the supplementary transmitter has to be at least 100m away from the main base station.

### User Equipment UE Interference Issues

Using the TDD band as an extra downlink channel for data also involves interference issues for the UE.

It is unpractical that an UE transmits in the FDD uplink band, while receiving in the TDD band. Therefore using the TDD band as an extra downlink capacity is only done at instants in time when the UE is not transmitting.
- A standard FDD UE transmitting in the uplink FDD band can cause a interference to a nearby UE receiving in the TDD band. Such interference is mitigated by the user of the TDD band reporting interference measurements, and the network not allocating resources at certain times where necessary in consequence.

### Further Implementation Details

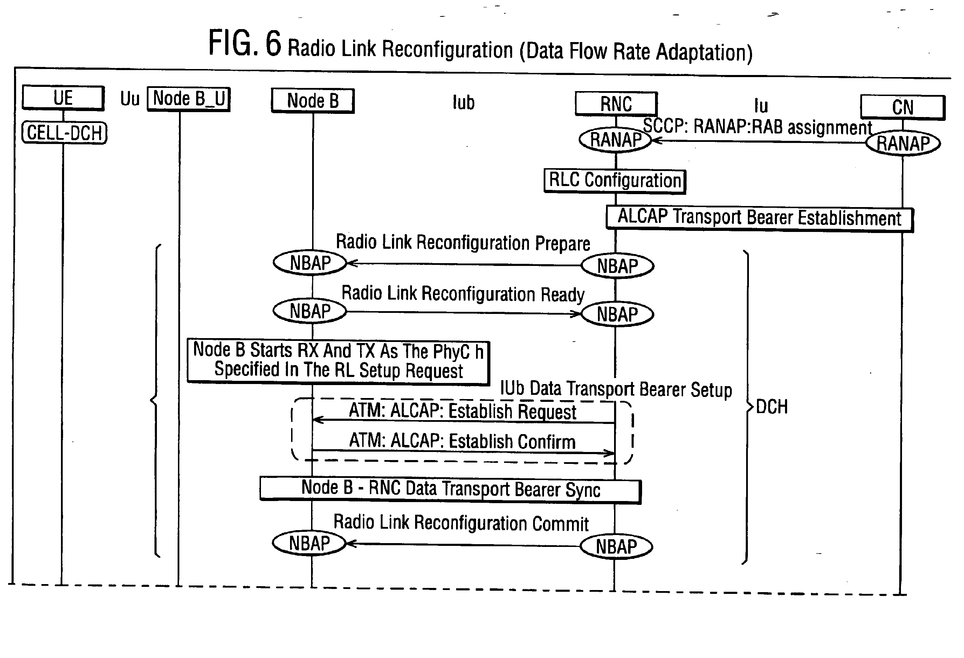

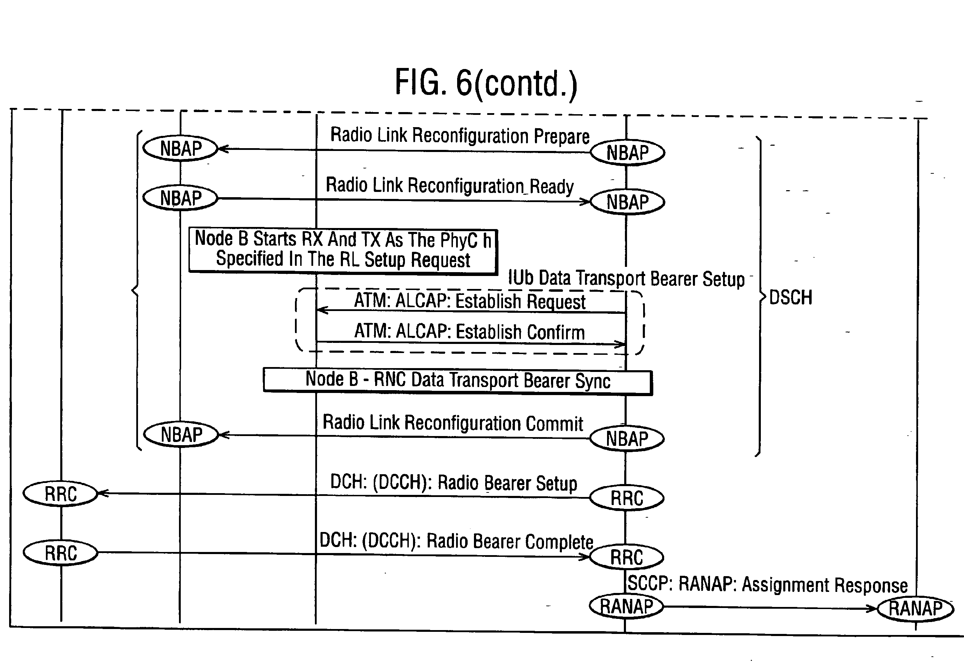

An example of the scheme in a UMTS System for call set up using DSCH on a supplementary channel is shown in Figures 6 to 9.

To send data using DSCH on the supplementary transmitter ST over a supplementary RF band (f₃), it is necessary to reconfigure an established radio link over the controlling base station (BS) (also referred to as Node B) and the User Equipment.

Figures 6 to 9 show the message blocks that are needed to process the communication through such DSCH channel. They show how a Radio Network Controller RNC would schedule the transmission of data over both the Dedicated Channel DCHand the new Downlink Shared Channel, so that they are all 'readable' by the User Equipment UE. This has similarities with what happens when a standard DSCH is used while a UE is in handover. In such case DCH goes transparently from use by controlling Radio Network Controller CRNC to the base station (Node B) through the Drift Radio Network Controller DRNC, while DSCH data are transmitted from Controlling Radio Network Controller CRNC to Drift Radio Network Controller DRNC, for scheduling and transmission.

As shown in Figure 6, radio link configuration is used to adapt the data flow rate (increase or decrease).If the requested data flow rate is sufficiently high, the operation in compressed mode is instigated whereby the time frame is divided into two parts, one for DCH and the other for DSCH with only one being used at any time instant. The data flow is adapted by modifying the spreading factor for DCH and DSCH. Note also that the ratio of transmission time slots between DCH and DSCH could also be varied as a way of increasing or decreasing the traffic ratio or capacity between DCH for uplink and DSCH on downlink channels. For reference in UTRAN FDD (UMTS Terrestrial Radio Access Network - Frequency Division Duplex) Standards - Compliant Systems compressed mode the maximum number of timeslots per frame usable for DSCH is seven. In other systems this can be allowed to be up to fourteen slots per frame. Figure 6 shows the messaging for the base station (Node B) and supplementary transmitter ST (here denoted Node B_U in the Figures 6 to 9 for the Radio Links Configuration set-up followed by Radio Resource Control RRC set-up in UE. This is initial preparation for the higher layers within the UMTS cellular system.

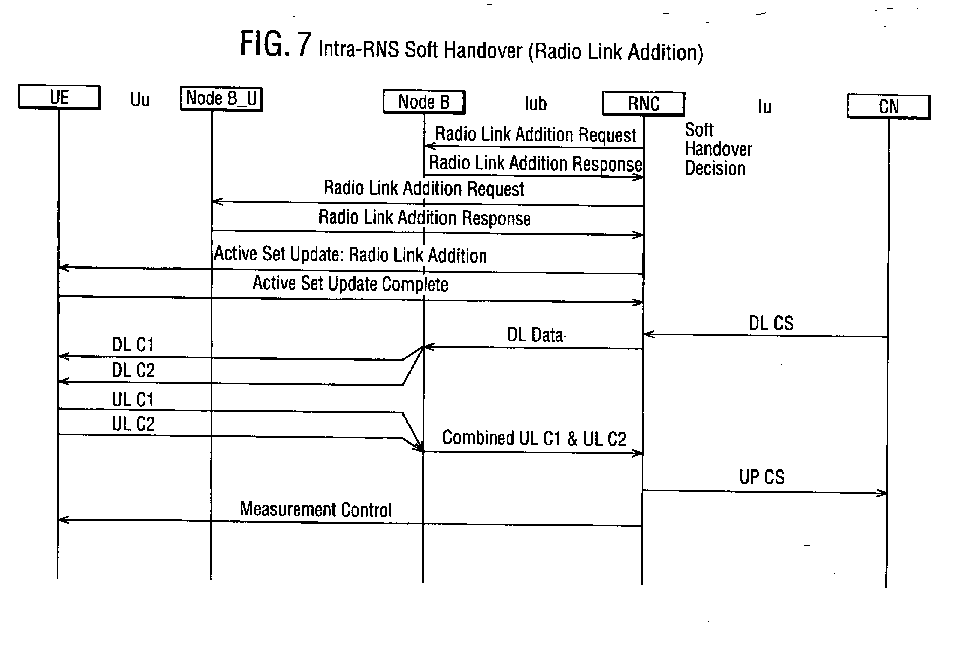

Figure 7 shows the message sequence as a signalling block for initiating the DSCH data transfer from the supplementary transmitter ST denoted Node B_U.

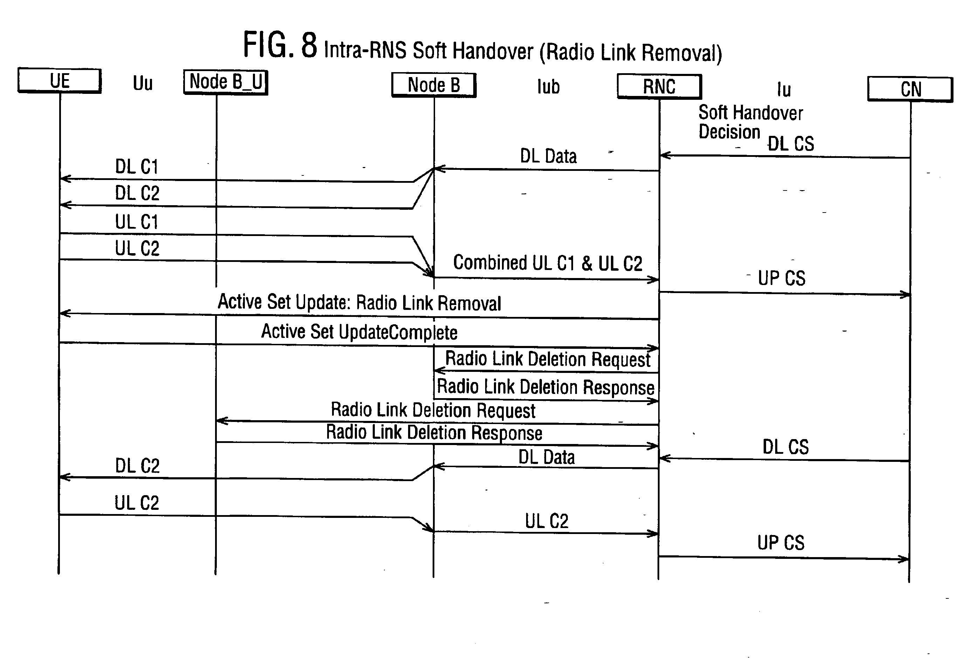

Figure 8 shows the message sequence as a signalling block for closing the DSCH data transfer from the supplementary transmitter ST denoted Node B_U.

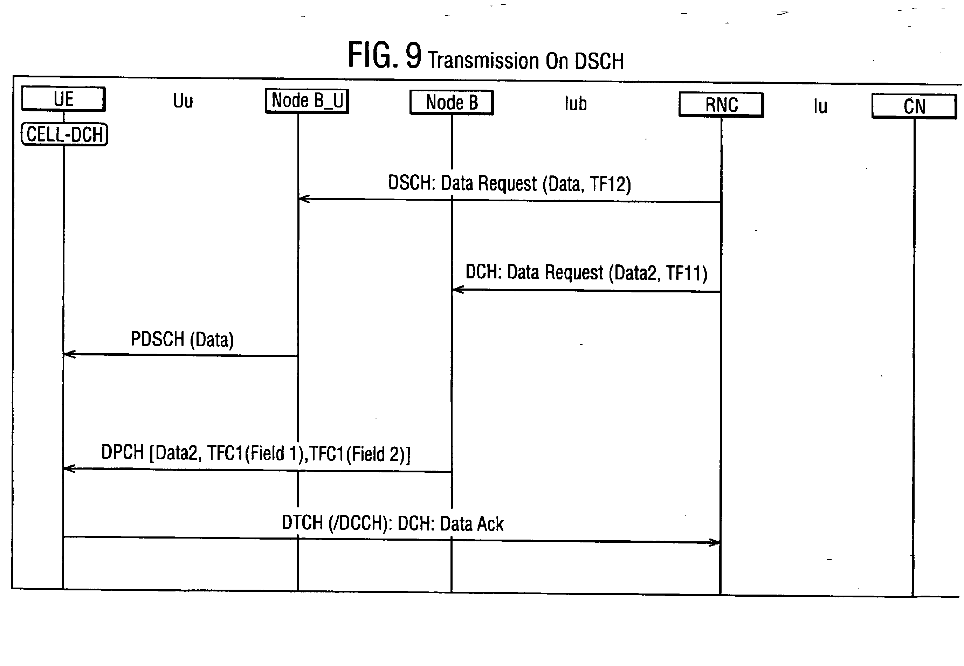

Figure 9 shows the message sequence as a signalling block for transmission of data over the DSCH channel active over from the supplementary transmitter denoted Node B_U.

The Radio Network Controller RNC node schedules all the traffic sessions by controlling the timings of the DCH and DSCH transmissions per compressed mode frame. This frame structure is repeated for as long as the session lasts, or in other embodiments, it can be adaptive over time current to traffic behaviour so as to ensure efficient use of channel resource. There is a need to allow for a guard period between DCH and DSCH transmissions due to the physical separation between the base station (Node B) and supplementary transmitter (Node B_U). For example, the DCH transmission should start at the beginning of the time slot programmed for the end of compressed mode. The guard period is taken from the last time slot of compressed mode. This sequence continues until the end of transmission or a modification of data flow rate. Sequencing a mixture of the above messages, user traffic can be managed over the DCH and DSCH channels for the UE.

### Other points

This scheme is particularly suitable for use within buildings or for other low mobility applications.

Possible applications include providing UPD (unit packet data) service for a multimedia service downlink where all the frame is used as downlink (DL) for several frames. An application using TCP (traffic control protocol) can also be used for several frames, however this can be improved by restricting the DL0 to a portion of the frame leaving some period for signalling. In terms of packet control, options include:
- Use the DL0 as the UPD only broadcast for the total duration of the frame.
- Use the DL0 in portion of the frame and will use a small portion for DL 1 and UL2 for signalling and other power control etc... to be useful as a more reliable TCP protocol.
- Use DL0 for TCP as a broadcast for the entire duration of the frame.

The proportion of time, allocated to each channel UL2 and DLO can either be variable or fixed.

As regards transmission scheduling a radio network controller would schedule the transmission of data over both the DCH from the base station and the new DSCH from the supplementary transmitter, so that they are all 'readable' by the UE.

This may seem quite a complex task, however it has probably similarities with what happens when a standard DSCH is used while a UE is in handover. In this case DCH goes transparently from CRNC to Node b through the DRNC, while DSCH data are transmitted from Control Radio Network Controller CRNC to Drift Radio Network Controller DRNC, for scheduling and transmission.

### Use of an extra unpaired channel uplink.

Where it is desired to send relatively large amounts of data uplink from a user equipment UE to a base station BS an alternative system as shown in Figure 10 is provided. Instead of a supplementary transmitter, a supplementary receiver SR is provided at the base station. This receives the extra data from the user equipment as a channel ULO carried on the common packet channel CPCH.

## Claims

1. Wireless telecommunication system comprising a base station (BS) and a user terminal (UE), in use the base station sending some data to the user terminal on a first channel (DL1) at a first frequency (f₁) in selected time slots within time frames and the user terminal sending some data to the base station on a second channel (UL2) of a second frequency (f₂) in selected time slots within time frames,
the first frequency and second frequency being offset,
the apparatus further comprising a unit operative to transmit further data to or receive further data from the user terminal on a third channel (DL₀) at a third frequency (f₃), different from the first frequency and second frequency,
**characterized in that** said further data is transmitted or received in time slots in which data is not sent on the first channel nor the second channel; and
the first and second channels are paired frequency division duplex channels in compressed mode such that time slots are available in each time frame to be used by the third channel.

2. A system according to claim 1 in which the third channel is set on a bearer channel shared between a plurality of user terminals.

3. A system according to claim 1 or claim 2 being a UMTS network.

4. A system according to claim 3, in which the third channel is sent downlink and the unit is a transmitter operative to transmit the third channel on the Down Link Shared Channel (DSCH).

5. A system according to claim 3 in which the third channel is sent uplink and the unit is a receiver operative to receive the third channel on the Common Packet Channel.

6. A system according to any preceding claim in which the unit is at least approximately 100 metres from the base station.

7. A system according to any preceding claim, in which the first frequency and second frequency are a duplex pair of frequencies in accordance with IMT2000 and the third frequency is any available other frequency.

8. A system according to any preceding claim, in which the first frequency is in the 1920 to 1980 MHz band, the second frequency is in 2110 to 2170 MHz band, and the third frequency is in the band 1900 to 1920 MHz.

9. A method of wireless telecommunication comprising the steps of:
transmitting downlink to a user terminal some data on a first channel in selected time slots within time frames and at a first frequency,
transmitting from the user terminal uplink some data on a second channel in selected time slots within time frames and at a second frequency,
transmitting or receiving respectively to or from the user terminal further data on a third channel at a third frequency,**characterized in that** said further data is sent on the third channel in timeslots in which data is not sent on the first channel nor the second channel; and
the first and second channels are paired frequency division duplex channels in compressed mode such that time slots are available in each time frame to be used by the third channel.

## Patentansprüche

1. Funkkommunikationssystem mit einer Basisstation (BS) und einem Benutzerendgerät (UE), wobei die Basisstation in Betrieb einige Daten zum Benutzerendgerät auf einem ersten Kanal (DL1) mit einer ersten Frequenz (f₁) in ausgewählten Zeitschlitzen in Zeitrahmen sendet und das Benutzerendgerät einige Daten zur Basisstation auf einem zweiten Kanal (UL2) einer zweiten Frequenz (f₂) in ausgewählten Zeitschlitzen in Zeitrahmen sendet,
wobei die erste Frequenz und die zweiten Frequenz versetzt sind,
wobei die Vorrichtung weiterhin eine Einheit zum Übertragen weiterer Daten zu oder Empfangen weiterer Daten von dem Benutzerendgerät auf einem dritten Kanal (DL₀) mit einer dritten Frequenz (f₃) umfaßt, die sich von der ersten Frequenz und der zweiten Frequenz unterscheidet,
**dadurch gekennzeichnet, daß** die weiteren Daten in Zeitschlitzen übertragen oder empfangen werden, in denen Daten weder auf dem ersten Kanal noch auf dem zweiten Kanal gesendet werden; und
der erste und zweite Kanal gepaarte Frequenzduplexkanäle im komprimierten Modus sind, so daß in jedem Zeitrahmen Zeitschlitze zur Verwendung durch den dritten Kanal verfügbar sind.

2. System nach Anspruch 1, in dem der dritte Kanal auf einen zwischen einer Mehrzahl von Benutzerendgeräten geteilten Trägerkanal eingestellt ist.

3. System nach Anspruch 1 oder 2, das ein UMTS-Netz ist.

4. System nach Anspruch 3, bei dem der dritte Kanal abwärts gesendet wird und die Einheit ein Sender zum Übertragen des dritten Kanals auf dem DSCH (Down Link Shared Channel) ist.

5. System nach Anspruch 3, in dem der dritte Kanal aufwärts gesendet wird und die Einheit ein Empfänger zum Empfangen des dritten Kanals auf dem gemeinsamen Paketkanal ist.

6. System nach einem vorherigen Anspruch, in dem sich die Einheit mindestens annähernd 100 Meter von der Basisstation befindet.

7. System nach einem vorhergehenden Anspruch, in dem die erste Frequenz und zweite Frequenz ein Duplexpaar von Frequenzen gemäß IMT2000 sind und die dritte Frequenz eine beliebige verfügbare andere Frequenz ist.

8. System nach einem vorhergehenden Anspruch, in dem die erste Frequenz im 1920 bis 1980-MHz-Band liegt, die zweite Frequenz im 2110- bis 2170-MHz-Band liegt und die dritte Frequenz in dem 1900-bis 1920-MHz-Band liegt.

9. Funkkommunikationsverfahren mit folgenden Schritten:
Abwärtsübertragen zu einem Benutzerendgerät einiger Daten auf einem ersten Kanal in ausgewählten Zeitschlitzen in Zeitrahmen und mit einer ersten Frequenz,
Aufwärtsübertragen vom Benutzerendgerät einiger Daten auf einem zweiten Kanal in ausgewählten Zeitschlitzen in Zeitrahmen und mit einer zweiten Frequenz,
Übertragen oder Empfangen zu bzw. von dem Benutzerendgerät weiterer Daten auf einem dritten Kanal mit einer dritten Frequenz, **dadurch gekennzeichnet, daß** diese weiteren Daten auf dem dritten Kanal in Zeitschlitzen gesendet werden, in denen Daten weder auf dem ersten Kanal noch dem zweiten Kanal gesendet werden; und
der erste und zweite Kanal gepaarte Frequenzduplexkanäle in komprimiertem Modus sind, so daß in jedem Zeitrahmen durch den dritten Kanal zu benutzende Zeitschlitze verfügbar sind.

## Revendications

1. Système de télécommunications sans fil comprenant une station de base (BS) et un terminal d'utilisateur (UE), en cours d'utilisation la station de base envoyant des données au terminal d'utilisateur sur un premier canal (DL1) à une première fréquence (f₁) dans des tranches de temps sélectionnées dans des trames de temps et le terminal d'utilisateur envoyant des données à la station de base sur un deuxième canal (UL2) d'une deuxième fréquence (f₂) dans des tranches de temps sélectionnées dans des trames de temps,
la première fréquence et la deuxième fréquence étant décalées,
l'appareil comprenant en outre une unité fonctionnant pour transmettre d'autres données au terminal d'utilisateur ou en recevoir de celui-ci sur un troisième canal (DL₀) à une troisième fréquence (f₃), différente de la première et de la deuxième fréquence,
**caractérisé en ce que** lesdites autres données sont transmises ou reçues dans des tranches de temps dans lesquelles des données ne sont pas envoyées sur le premier canal ou le deuxième canal ; et
les premier et deuxième canaux sont des canaux duplex à répartition en fréquence pairés en mode compressé de telle sorte que des tranches de temps soient disponibles dans chaque trame de temps et puissent être utilisées par le troisième canal.

2. Système selon la revendication 1, dans lequel le troisième canal est réglé sur un canal de support partagé entre une pluralité de terminaux d'utilisateur.

3. Système selon la revendication 1 ou la revendication 2, étant un réseau UMTS.

4. Système selon la revendication 3, dans lequel le troisième canal est envoyé sur voie descendante et l'unité est un émetteur fonctionnant pour transmettre le troisième canal sur le Canal partagé de Voie descendante (DSCH).

5. Système selon la revendication 3, dans lequel le troisième canal est envoyé sur voie montante et l'unité est un récepteur fonctionnant pour recevoir le troisième canal sur le Canal de Paquets commun.

6. Système selon l'une quelconque des revendications précédentes, dans lequel l'unité est située à au moins approximativement 100 mètres de la station de base.

7. Système selon l'une quelconque des revendications précédentes, dans lequel la première fréquence et la deuxième fréquence sont une paire duplex de fréquences conformément à l'IMT2000 et la troisième fréquence est n'importe quelle autre fréquence disponible.

8. Système selon l'une quelconque des revendications précédentes, dans lequel la première fréquence est comprise dans la bande de 1920 à 1980 MHz, la deuxième fréquence est comprise dans la bande de 2110 à 2170 MHz et la troisième fréquence est comprise dans la bande de 1900 à 1920 MHz.

9. Procédé de télécommunications sans fil comprenant les étapes de :
transmission sur voie descendante à un terminal d'utilisateur de données sur un premier canal dans des tranches de temps sélectionnées dans des trames de temps et à une première fréquence,
transmission par le terminal d'utilisateur de données sur un deuxième canal dans des tranches de temps sélectionnées dans des trames de temps et à une deuxième fréquence,
transmission ou réception respectivement vers ou depuis le terminal d'utilisateur d'autres données sur un troisième canal à une troisième fréquence, **caractérisé en ce que** lesdites autres données sont envoyées sur le troisième canal dans des tranches de temps dans lesquelles des données ne sont pas envoyées sur le premier canal ou le deuxième canal ; et
les premier et deuxième canaux sont des canaux duplex à répartition en fréquence pairés en mode compressé de telle sorte que des tranches de temps soient disponibles dans chaque trame de temps et puissent être utilisées par le troisième canal.
